# EUROPEAN PATENT APPLICATION

(11) **EP 4 543 057 A1**
(43) Date of publication of application: **23.04.2025**
(21) Application number: 23824227.5
(22) Date of filing: 14.06.2023
(51) Int. Cl.: H04W 4/40, B60W 50/04, B60W 50/02, H04W 4/02, H04W 24/10, H04W 92/18

(54) **METHOD AND DEVICE FOR MISBEHAVIOR DETECTION THROUGH INTEGRATION OF SURROUNDING INFORMATION**

(30) Priority: 14.06.2022 KR 20220072374
(71) Applicant: LG Electronics Inc., Yeongdeungpo-gu Seoul 07336 (KR)
(72) Inventor: KIM, Myoungseob, Seoul 06772 (KR); SEO, Hanbyul, Seoul 06772 (KR); LEE, Yoonjong, Seoul 06772 (KR); KIM, Heejin, Seoul 06772 (KR)
(74) Representative: Mooser, Sebastian Thomas
(86) International application number: PCT/KR2023/008197
(87) International publication number: WO 2023/244013

(57) **Abstract**

Provided are a method for a first device to perform wireless communication and a device for supporting same. The method may comprise the steps of: acquiring first state information related to a second device; detecting an inconsistency with the second device on the basis of the first state information; receiving second state information for determining misbehavior of the second device in which the inconsistency was detected; and determining the misbehavior of the second device on the basis of the second state information.

## Description

### TECHNICAL FIELD

This disclosure relates to a wireless communication system.

### BACKGROUND ART

A wireless communication system is a multiple access system that supports communication of multiple users by sharing available system resources (e.g. a bandwidth, transmission power, etc.) among them. Examples of multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi-Carrier Frequency Division Multiple Access (MC-FDMA) system.

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic.

Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Vehicle-to-everything (V2X) communication may also be supported in NR.

### DISCLOSURE

### TECHNICAL SOLUTION

In an embodiment, provided is a method for performing wireless communication by a first device. The method may comprise: obtaining first state information related to a second device; detecting an inconsistency with the second device based on the first state information; receiving second state information for determining misbehavior of the second device in which the inconsistency is detected; and determining the misbehavior of the second device based on the second state information.

In an embodiment, provided is a first device adapted to perform wireless communication. The first device may comprise: at least one transceiver; at least one processor; and at least one memory connected to the at least one processor and storing instructions that, based on being executed by the at least one processor, cause the first device to perform operations comprising: obtaining first state information related to a second device; detecting an inconsistency with the second device based on the first state information; receiving second state information for determining misbehavior of the second device in which the inconsistency is detected; and determining the misbehavior of the second device based on the second state information.

In an embodiment, provided is a processing device adapted to control a first device. The processing device may comprise: at least one processor; and at least one memory connected to the at least one processor and storing instructions that, based on being executed by the at least one processor, cause the first device to perform operations comprising: obtaining first state information related to a second device; detecting an inconsistency with the second device based on the first state information; receiving second state information for determining misbehavior of the second device in which the inconsistency is detected; and determining the misbehavior of the second device based on the second state information.

In an embodiment, provided is a non-transitory computer-readable storage medium storing instructions. The instructions, when executed, may cause a first device to perform operations comprising: obtaining first state information related to a second device; detecting an inconsistency with the second device based on the first state information; receiving second state information for determining misbehavior of the second device in which the inconsistency is detected; and determining the misbehavior of the second device based on the second state information.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of direct communication between UEs, based on an embodiment of the present disclosure.
FIG. 4 shows an example of collected perception based on an embodiment of the present disclosure.
FIGs. 5 to 15 show a method or procedure for detecting a UE that performs misbehavior, based on an embodiment of the present disclosure.
FIG. 16 shows an example of a common safety request (CSR) message, based on an embodiment of the present disclosure.
FIG. 17 shows an example of perceived objects information feedback using a BSM extension message (optional part), based on an embodiment of the present disclosure.
FIG. 18 shows a method for a first device to perform wireless communication, based on an embodiment of the present disclosure.
FIG. 19 shows a method for a second device to perform wireless communication, based on an embodiment of the present disclosure.
FIG. 20 shows a communication system 1, based on an embodiment of the present disclosure.
FIG. 21 shows wireless devices, based on an embodiment of the present disclosure.
FIG. 22 shows a signal process circuit for a transmission signal, based on an embodiment of the present disclosure.
FIG. 23 shows another example of a wireless device, based on an embodiment of the present disclosure.
FIG. 24 shows a hand-held device, based on an embodiment of the present disclosure.
FIG. 25 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile internet, high throughput, high network capacity, high energy efficiency, low backhaul and access network congestion, and enhanced data security.

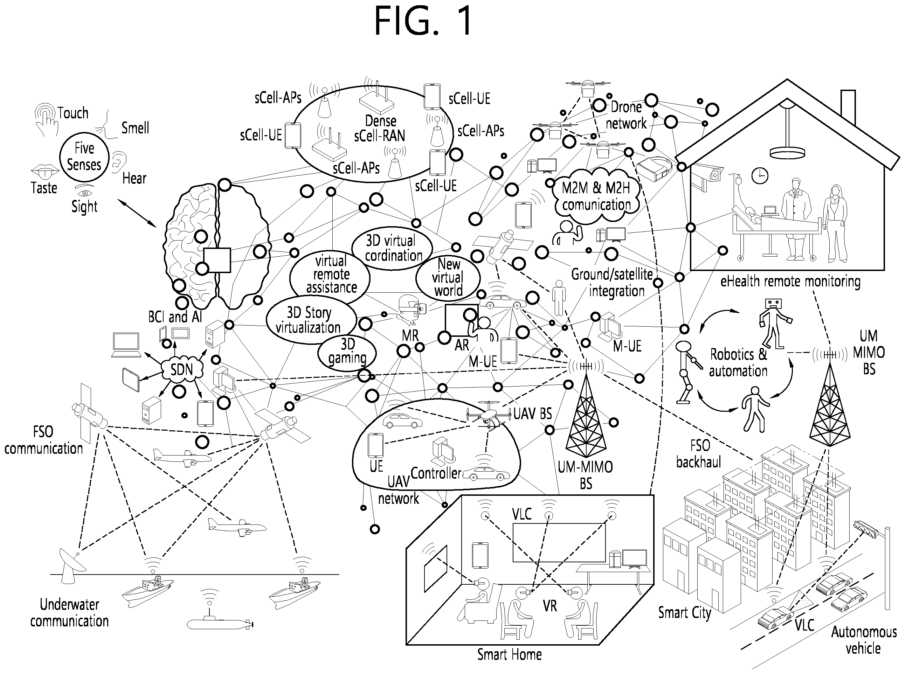

FIG. 1 shows a communication structure providable in a 6G system, based on an embodiment of the present disclosure. The embodiment of FIG. 1 may be combined with various embodiments of the present disclosure.

The 6G system will have 50 times higher simultaneous wireless communication connectivity than a 5G wireless communication system. URLLC, which is the key feature of 5G, will become more important technology by providing end-to-end latency less than 1 ms in 6G communication. The 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5 GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5 GB network in order to ensure flexibility, reconfigurability and programmability.

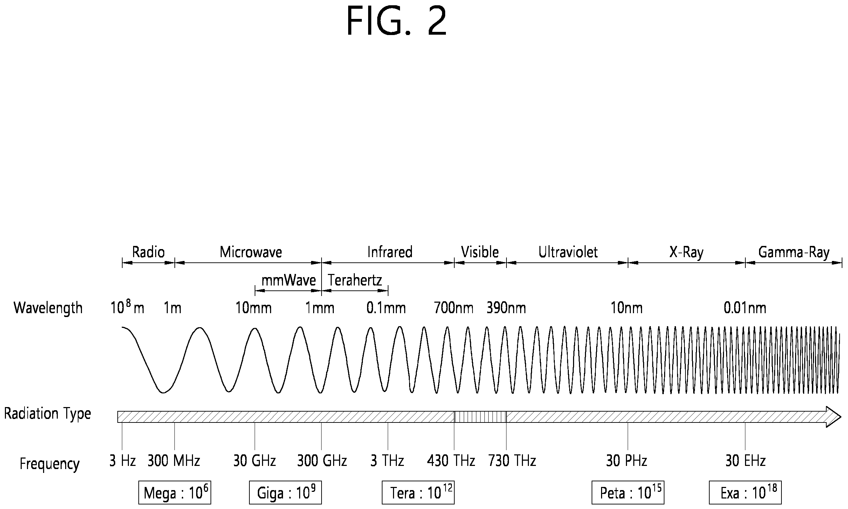

Core implementation technology of 6G system is described below.
- Artificial Intelligence (AI): Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical backhaul network (FSO Backhaul Network)
- Non-terrestrial networks (NTN)
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Autonomous driving (self-driving): For perfect autonomous driving, it is necessary to notify dangerous situation of each other through communication between vehicle and vehicle, to check information like parking information location and signal change time through communication between vehicle and infrastructure such as parking lots and/or traffic lights. Vehicle to everything (V2X) that is a core element for establishing an autonomous driving infrastructure is a technology that vehicle communicates and shares with various elements in road for autonomous driving such as vehicle to vehicle (V2V), vehicle to infrastructure (V2I). To maximize a performance of autonomous driving and to secure high safety, high transmission speed and low latency technology have to be needed. Furthermore, to directly control vehicle in dangerous situation and to actively intervene vehicle driving beyond a level of a warning or a guidance message to driver, as the amount of the information to transmit and receive is larger, autonomous driving is expected to be maximized in 6G being higher transmission speed and lower latency than 5G.

For clarity in the description, 5G NR is mainly described, but the technical idea according to an embodiment of the present disclosure is not limited thereto. Various embodiments of the present disclosure can also be applied to 6G communication systems.

In vehicle-to-vehicle communication, a UE within a vehicle may transmit its own information to prevent accidents and ensure road safety, efficient driving, or perform pre-coordinated operation, etc. In this case, each UE may transmit mobility-related information such as basic identification information, location information, or velocity information derived from the information, and heading information, etc., so that other UEs or networks can identify and track itself.

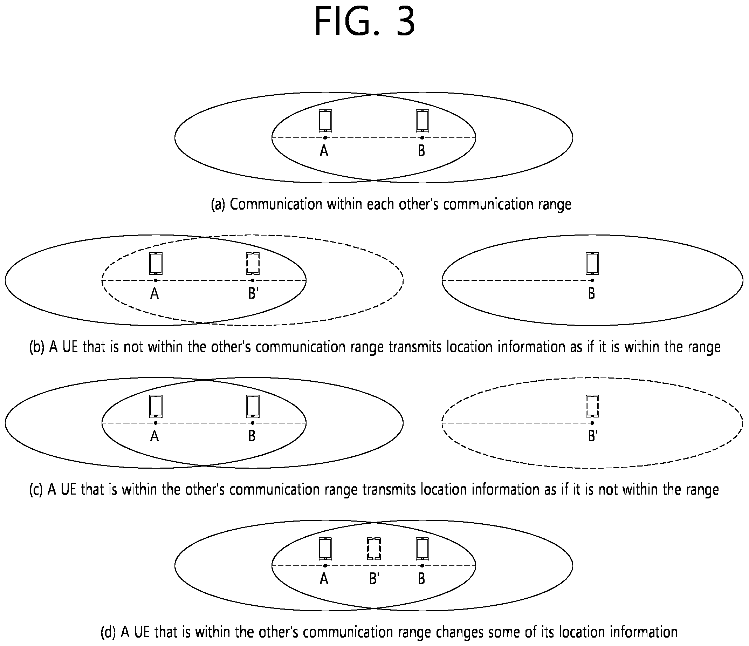

FIG. 3 shows an example of direct communication between UEs, based on an embodiment of the present disclosure. The embodiment of FIG. 3 may be combined with various embodiments of the present disclosure.

In the case of a PC5 interface for performing direct communication between UEs, since the transmitting UE and the receiving UEs (UE A, B) are within each other's transmission coverage as shown in (a) of FIG. 3, they can sense each other and obtain information simply by broadcasting messages. Naturally, since the range of transmission coverage is precisely determined, it is not the case that communication is always smooth within that range and that communication is always blocked outside that range. For example, it may be an experimentally determined range where a certain level of transmission performance (e.g., target packet reception ratio = 90%) is guaranteed for various situations (scenes) of a specific environment.

In this case, as in (b) of FIG. 3, if the peer UE B does not exist within the coverage of the UE A, but the UE B changes its location information to make it seem as if it is within the coverage of the UE A, i.e., as if it is at the location of the virtual UE B', and transmits a message, the message cannot be received by the UE A, so such information change and manipulation may be meaningless to the UE A. In addition, as in (c) of FIG. 3, if the peer UE B exists within the coverage of the UE A, but the UE B changes its location information to make it seem as if it is not within the coverage of the UE A, i.e., as if it is at the location of the virtual UE B', and transmits a message, the location information included in the message is outside the radius of the UE A, so it may be immediately determined as incorrect information. In this case, the received power level of the signal transmitted by the UE B (e.g., received signal strength indicator (RSSI)) may also be greater than a certain level (since the signal has been transmitted within the transmission radius), but considering the location information of the message transmitted by the UE B' or the distance difference between the UE A and the UE B', it may not match each other (when comparing the received power level according to the transmission distance). Naturally, in the case of communicating within each other's radius as in (d) of FIG. 3, if the UE B partially changes the location information and transmits it, the UE A may not be able to detect this using the above methods. In this case, the corresponding UE(s) may directly detect errors through different methods within each direct communication coverage, or the related road side unit (RSU), base station, etc. may detect this errors.

Meanwhile, communication may be possible between UEs that communicate using a cellular network, etc. rather than directly communicating UEs, even if there is no peer UE within the transmission coverage of each other. Therefore, in situations such as (b) and (c) of FIG. 3, more specifically, in a case where an application layer, etc. is allowed to replace original information and modulated location information is transmitted in a V2X message, it may be difficult to detect errors using characteristics of communication coverage, etc., as in direct communication.

In the present disclosure, methods that can be considered by the UE of the vehicle or the associated RSU, the base station, and the related server to prevent this are described. More specifically, in relation to a UE that is presumed to be transmitting incorrect/manipulated information while performing misbehavior, information that is difficult to manipulate may be requested and fed back to the UE or surrounding UEs, so that the misbehavior may be verified and detected. For example, in preparation for the case where the location information value of the V2X UE, etc., may be falsified and transmitted differently from actual information, a method for detecting the misbehavior through information of surrounding UEs or information of the corresponding UE and device(s) supporting the same are proposed.

Although the above has been described with respect to communication between vehicles as an example, the following description may be applied to any entity capable of transmitting its own mobility information, such as a vehicle, a motorcycle, a bicycle, a pedestrian, a robot, etc., and the mobility information may be transmitted through any device, such as a built-in device (e.g., OBD), a portable communication UE, or a dedicated communication device. In addition, the communication may be performed through direct communication or cellular-based communication, depending on the applicable embodiment and detailed method.

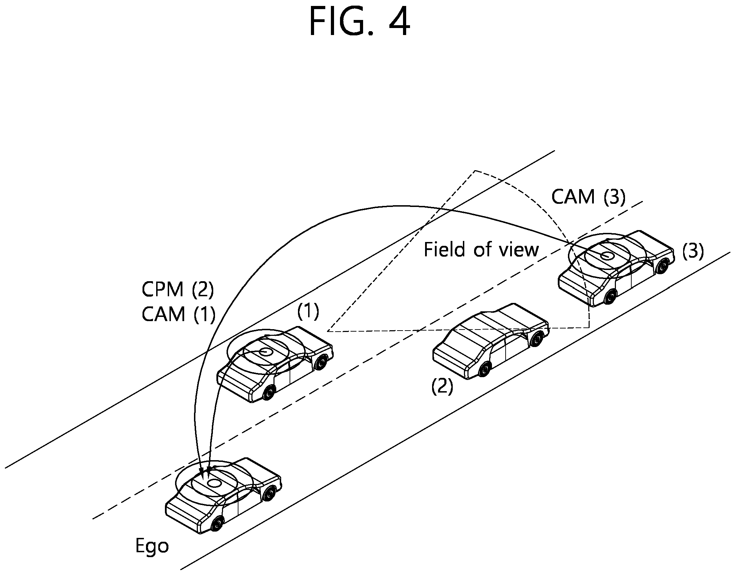

FIG. 4 shows an example of collected perception based on an embodiment of the present disclosure. The embodiment of FIG. 4 may be combined with various embodiments of the present disclosure.

In the case of vehicle status information (e.g., heading, position, velocity, etc.), the ego vehicle (or host vehicle (HV)) of FIG. 4 or vehicles 1 and 3 may directly transmit their own status in the form of a cooperative awareness message (CAM)/basic safety message (BSM), etc., or vehicle 1 may sense information of a vehicle without connectivity (no communication function at all, or does not support a specific interface/frequency, etc.) such as vehicle 2 and transmit it in the form of a collective perception message (CPM) (or sensor data sharing message (SDSM)). In this case, the CPM may also include information of a vehicle with a communication function.

In this case, it may be considered that the manipulation of the vehicle status information may occur from a connected vehicle (CV) rather than an unconnected vehicle (UV).

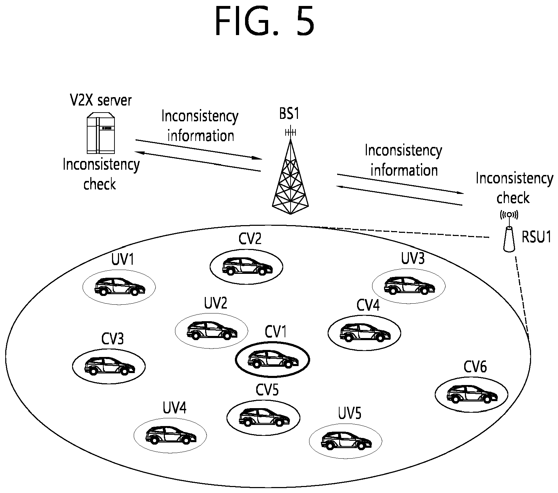

FIGs. 5 to 15 show a method or procedure for detecting a UE that performs misbehavior, based on an embodiment of the present disclosure. The embodiments of FIGs. 5 to 15 may be combined with various embodiments of the present disclosure.

In FIG. 5, when a vehicle performing operation such as manipulation of status information is referred to as CV1, CV1 itself may check for inconsistency of the status information, or the side receiving a message transmitted by CV1 (e.g., RSU/base station) may also check for such inconsistency.

In a state where it is not definitively determined whether this is due to a simple positioning error or an operation error, etc., or due to intentional falsification, the vehicle(s) as described above may be temporarily classified as performing misbehavior. Since it may be very inefficient to detect misbehavior for all vehicles at all times, the efficiency can be greatly increased by performing verification only for the vehicle(s) at the time when the temporarily misbehavior vehicle as described above is detected. The detailed method for the operation is described below.

### 1. Inconsistency check

The RSU/base station of FIG. 5 may check consistency by checking status information of UEs. In particular, if values (or the difference in values) of heading, position, velocity, etc. are out of a certain range, the RSU/base station may determine that the inconsistency has occurred. Although this alone cannot determine misbehavior, it may be thought that the corresponding UE is performing misbehavior with a higher probability than other UEs that maintain consistency. The following describes the operation of checking for misbehavior for these UEs.

### 2. Misbehavior detection

If the RSU/base station of FIG. 5 discovers or is reported that the inconsistency has occurred with respect to CV1, the RSU/base station may request information from the UE where the inconsistency has occurred, CV1, or its surrounding vehicles, to verify the authenticity of the current information. In addition, the RSU/base station may check information fed back in response to the request and determine the misbehavior. In this case, methods may be divided into the following depending on a target of requesting information and performing feedback.

### 2.1. Requesting information from surrounding vehicles of the vehicle performing potential misbehavior

The RSU/base station may request a message for obtaining information of CV1 from surrounding vehicles (CV2, CV3, ...) close to CV1 performing potential misbehavior of FIG. 5. In addition, surrounding vehicles (CV2, CV3, ...) close to CV1 performing potential misbehavior of FIG. 5 may transmit the message for obtaining information of CV1 to the RSU/base station. In addition, the RSU/base station may check whether information of CV1 exists in information collected from the corresponding vehicles.

Based on an interface, a type, etc. of the request message, it may be largely divided into RSU/PC5 interface-based, base station/Uu interface-based, etc., and each method is described below. The following methods may be used independently and selectively, or the detailed elements of each method may be combined and used. For example, in a situation where messages such as BSM, CPM, etc. are transmitted to surrounding vehicles/RSUs, etc. through the PC5 interface, CV1 or surrounding vehicles may transmit feedback information through the Uu interface by including it in the same or separate message. Alternatively, for example, in a situation where the BSM, CPM, etc. messages are transmitted/transferred to the base station/V2X server, etc. through the Uu interface, the operation (feedback message transmission for verification request and CPM transmission) may be performed again, by transmitting in the form of forwarding (or routing) to surrounding vehicles for verification (e.g., base station => RSU => vehicle), rather than directly performing the inconsistency and/or misbehavior determination, etc.

### 2.1.1. RSU/PC5 interface-based

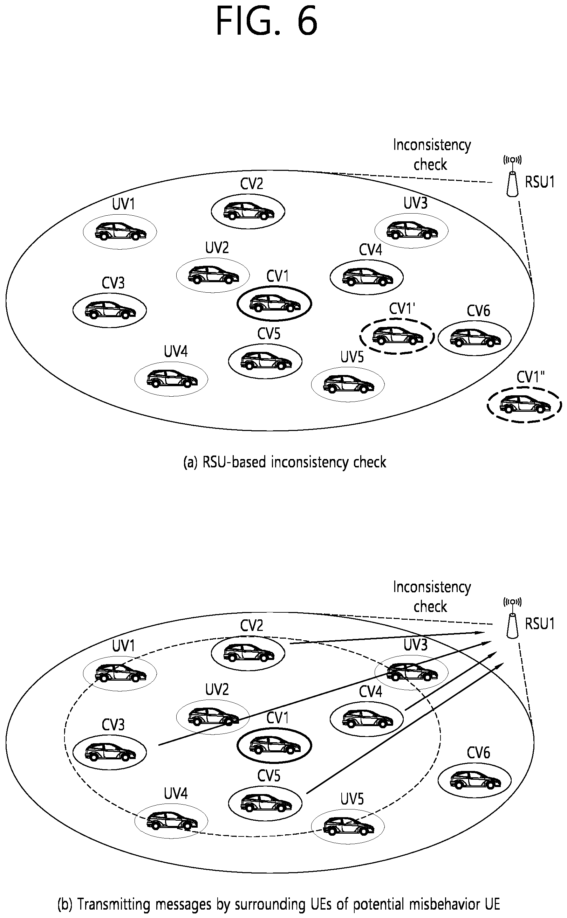

In (a) of FIG. 6, if the location reported by the CV1 UE exists within the coverage of the RSU1 and the actual location also exists within the coverage of the RSU1 (e.g., CV1' of (a) of FIG. 6), the inconsistency of the CV1 may be checked by PC5-based BSM, CPM, messages, etc. collected by the RSU1.

Alternatively, if the location reported by the CV1 UE is within the coverage of the RSU1 but the actual location is outside the coverage of the RSU1 (e.g., CV1" of (a) of FIG. 6), the upper base station/V2X server, etc. may check the inconsistency information and inform the RSU1. More specifically, for example, the RSU (i.e., RSU1) having the coverage that includes the location reported by the CV1 UE may be requested to check whether there is misbehavior of the UE.

When the CVs within the coverage of the RSU1 are transmitting BSM through the PC5 interface, the RSU may additionally request information (e.g., CPM) collectively perceived from surrounding vehicles of CV1 (except for the CV1) through the PC5 interface. Herein, for example, the surrounding vehicles may be all vehicles within the coverage of the RSU1. Alternatively, for example, the surrounding vehicles may be within a certain radius (e.g., radius 100m)/a certain area (e.g., within 50m of the upper, lower, left, right (east, west, south, north)) around the CV1. For example, the radius/area may increase (e.g., increase by 10m) from the initial value (e.g., radius of 30m) until a certain number of vehicles (e.g., 3 surrounding vehicles) are detected.

The surrounding vehicles that have received the request may collect (perform operation such as redundancy mitigation) BSM transmitted by surrounding CV vehicles including CV1 and transmit/feedback to RSU1. In this case, if the CV1 is not actually within the coverage of the RSU1, messages fed back by the CV vehicles will not include information on the CV1.

In some specific cases, even if there are no or very few surrounding vehicles that need to receive the request and transmit/feedback a message to the RSU, another RSU (i.e. RSU2) present around CV1 or a remote VRU capable of transmitting the message may also participate in this manner.

### 2.1.2. Base station/Uu interface-based

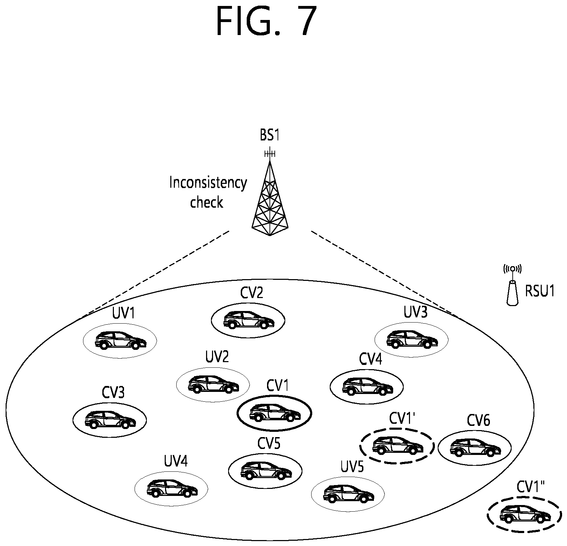

In FIG. 7, if the location reported by the CV1 UE is within the coverage of the base station 1 and the actual location is also within the coverage of the base station 1 (e.g., CV1' of FIG. 7), the inconsistency of the CV1 may be checked by Uu interface-based BSM, CPM, messages, etc. collected by the base station 1.

Alternatively, if the location reported by the CV1 UE is within the coverage of the base station 1 but the actual location is outside the coverage of the base station 1 (e.g., CV1" of FIG. 7), the upper V2X server, etc., may check the inconsistency information and inform the base station 1. More specifically, for example, the base station (i.e., base station 1) having the coverage that includes the location reported by the CV1 UE may be requested to check whether there is misbehavior of the UE.

When the CVs within the coverage of the base station 1 are transmitting BSM through the Uu interface, the base station 1 may additionally request information (e.g., CPM) collectively perceived from surrounding vehicles of CV1 (except the CV1) through the Uu interface. The surrounding vehicles that have received the request may collect (perform operation such as redundancy mitigation) BSM transmitted by surrounding CV vehicles including the CV1 and transmit/feedback the collected BSM to the base station 1.In this case, if the CV1 is not actually within the coverage of the base station 1, the message fed back by the CV vehicles will also not include information on the CV1.

### 2.1.3. Information collection and misbehavior detection

The above describes the method in which the RSU or the base station requests CVs for information on surrounding UEs, but if all of the CVs are configured to transmit messages including the collectively perceived information continuously and at a certain frequency or more (e.g., 10 Hz or more), the additional request procedure may be omitted. In this case, it may be checked whether CV1 exists (within the coverage) simply by analyzing the collected messages.

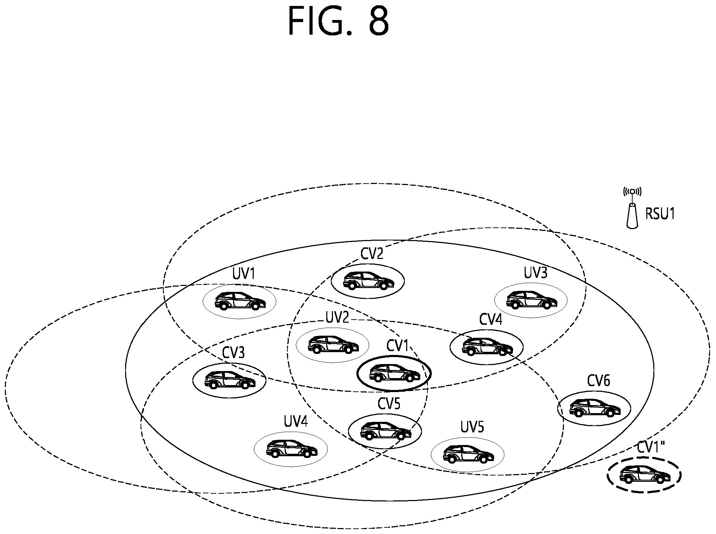

As shown in FIG. 8, if there are UEs such as CV2, CV3, and CV4 very close to CV1, if the RSU1/base station 1 checks messages CP2, CP3, and CP4 collected from the UEs, it may be checked which UEs are in the area. For example, information such as UE21, UE22, etc. may be checked in CP2, and information such as UE31, UE32, etc. may be checked in CP3, and information such as UE41, UE42, etc. may be checked in CP4. In this case, by tracking and matching the trajectories of these UEs for a certain period of time, it is possible to know which UEs are duplicated as the same UE and which UEs are determined to be separate UEs among the messages. In particular, information on a UE that is determined to be duplicated may be used by taking a representative value (sampling) from messages pointing to/including the UE or reprocessing it through statistical methods such as averaging.

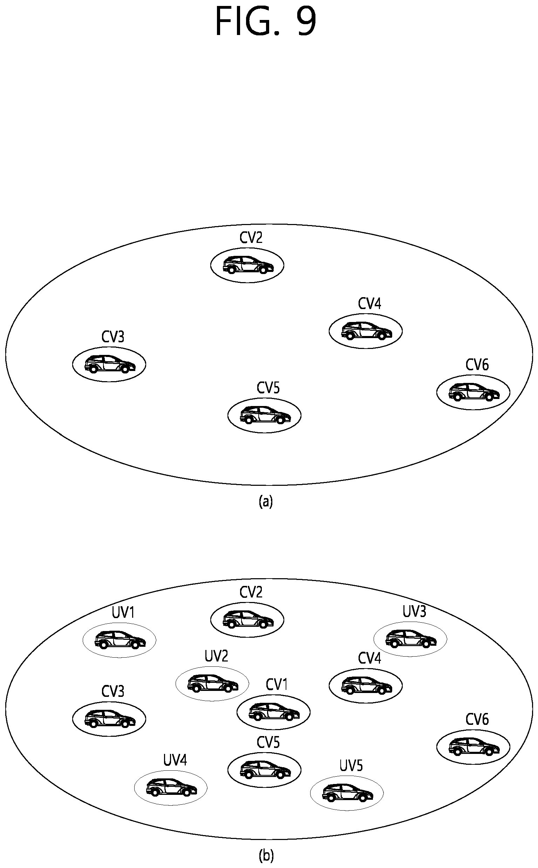

For example, if CV1 is actually located in CV1" outside the coverage of RSU1 as shown in FIG. 8, and each of the vehicles CV2 to CV5 has (direct) communication coverage as shown in FIG. 8, each of the messages CP2 to CP5, which is collectively perceived and transmitted by each of the vehicles CV2 to CV5, may include information of (CV) UEs as shown in Table 2. In this case, according to Table 2, there is no CV that detected CV1. In addition, if all the information transmitted by CV2 to CV5 is collected, all the information of CV2 to CV6 may be obtained, and a result as shown in (a) of FIG. 9 may be obtained. In this case, information on CV5, which is the information commonly transmitted by CV3 and CV4, is not completely identical and may have some errors, so it may be determined that it is the same UE by performing observation and matching for a certain period of time.

Table 2 shows an example of the surrounding UE information obtained by each UE.

**[Table 2]**

| UE | Message | Received Information | | | | | |
|---|---|---|---|---|---|---|---|
| | | CV1 | CV2 | CV3 | CV4 | CV5 | CV6 |
| CV2 | CP2 | X | | | O | | |
| CV3 | CP3 | X | | | | O | |
| CV4 | CP4 | X | O | | | O | O |
| CV5 | CP5 | X | | O | | | |

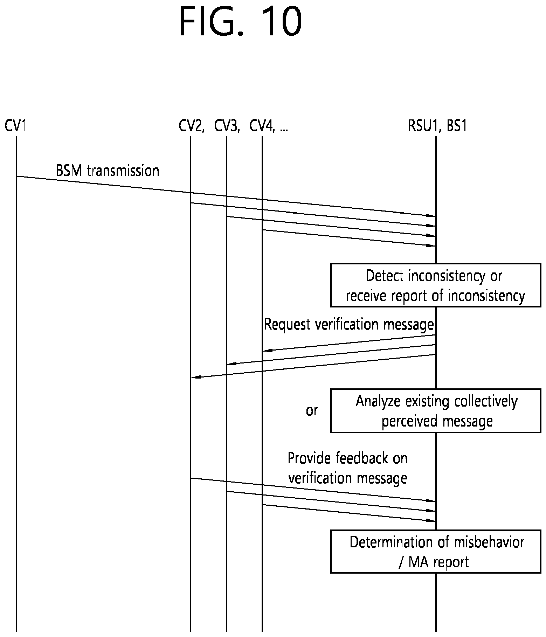

The CV information collected above is different from the CV-related information (CV1 to CV6) as in (a) of FIG. 9, which is already obtained by the V2X server and RSU1, and the information reported from other CVs around CV1 ((b) of FIG. 7) is missing information on CV1. Therefore, in this case, it may be determined that CV1 is performing misbehavior, and in particular, it may be determined that it has generated a location information error so large that it cannot be observed within the coverage of RSU1. If the surrounding vehicles fail to detect the UE in which the inconsistency has occurred and a final misbehavior determination is made, the RSU/base station may transmit a report of the misbehavior to a misbehavior authority (MA). Through this, operations such as suspension of service, revocation of authentication for the UE, etc. may be performed. The above processes may be represented as in FIG. 10.

FIG. 10 shows an example of detecting misbehavior based on reception/sensing information of surrounding UEs, based on an embodiment of the present disclosure.

For example, in the embodiment of FIG. 10, if CVs are configured to continuously or periodically transmit information collectively perceived, the request procedure and the feedback procedure may be omitted.

### 2.2. Requesting information from a vehicle performing potential misbehavior

The RSU/base station may request a message for surrounding information of CV1 from the CV1 performing potential misbehavior of FIG. 5, so that the CV1 may feed back the message for surrounding information of the CV1. In addition, the RSU/base station may compare the information collected from CV1 with information collected from the V2X server, etc., to determine whether the CV1 is actually misbehaving. Based on an interface, a type, etc. of the request message, it may be largely divided into RSU/PC5 interface-based, base station/Uu interface-based, etc., and each method is described below. The following methods may be used independently and selectively, or the detailed elements of each method may be combined and used. For example, in a situation where messages such as BSM, CPM, etc. are transmitted to surrounding vehicles/RSUs, etc. through the PC5 interface, CV1 or surrounding vehicles may transmit feedback information through the Uu interface by including it in the same or separate message. Alternatively, for example, in a situation where the BSM, CPM, etc. messages are transmitted/transferred to the base station/V2X server, etc. through the Uu interface, the operation (feedback message transmission for verification request and CPM transmission) may be performed again, by transmitting in the form of forwarding (or routing) to surrounding vehicles for verification (e.g., base station => RSU => vehicle), rather than directly performing the inconsistency and/or misbehavior determination, etc.

### 2.2.1. RSU/PC5 interface-based

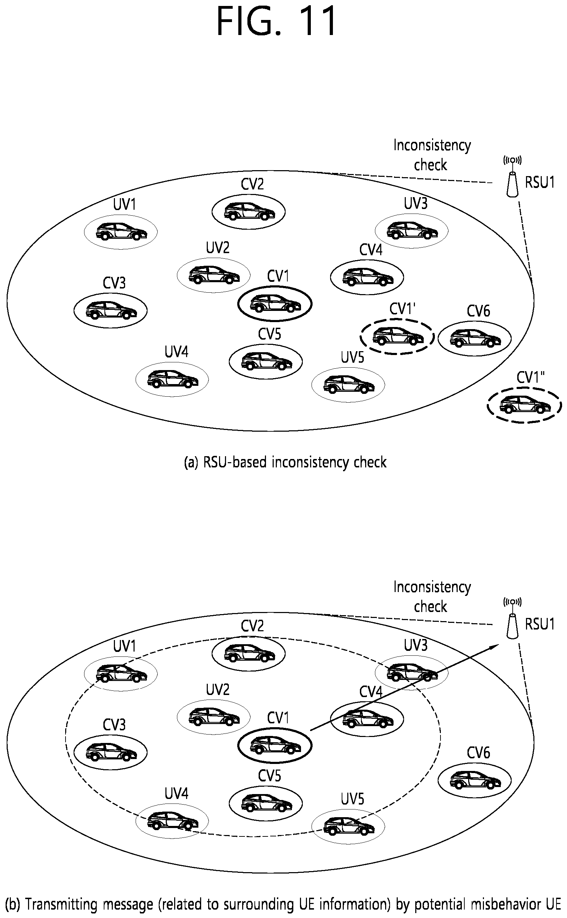

In (a) of FIG. 11, if the location reported by the CV1 UE exists within the coverage of the RSU1 and the actual location also exists within the coverage of the RSU1 (e.g., CV1' of (a) of FIG. 11), the inconsistency of the CV1 may be checked by PC5-based BSM, CPM, messages, etc. collected by the RSU1.

Alternatively, if the location reported by the CV1 UE is within the coverage of the RSU1 but the actual location is outside the coverage of the RSU1 (e.g., CV1" of (a) of FIG. 11), the upper base station/V2X server, etc. may check the inconsistency information and inform the RSU1. More specifically, for example, the RSU (i.e., RSU1) having the coverage that includes the location reported by the CV1 UE may be requested to check whether there is misbehavior of the UE.

When the CVs within the coverage of the RSU1 are transmitting BSM through the PC5 interface, the RSU may additionally request information (e.g., CPM) collectively perceived from surrounding vehicles through the PC5 interface from CV1. Herein, for example, the surrounding vehicles may be all vehicles within the coverage of the RSU1. Alternatively, for example, the surrounding vehicles may be within a certain radius (e.g., radius 100m)/a certain area (e.g., within 50m of the upper, lower, left, right (east, west, south, north)) around the CV1. For example, the radius/area may increase (e.g., increase by 10m) from the initial value (e.g., radius of 30m) until a certain number of vehicles (e.g., 3 surrounding vehicles) are detected.

The CV1 that has received the request may collect BSM messages transmitted by surrounding CV vehicles (may perform operation such as redundancy mitigation) and transmit/feedback them to RSU1. However, in order to increase the accuracy and reliability of detecting the misbehavior, additional information may be requested in addition to the transmission of the received BSM message(s). For example, the transmission of sensing information regarding the surroundings by a specific vehicle may operate on a broadcast basis, but it may also operate on a groupcast basis for a group of vehicles/road users at a specific location or in a specific situation, or on a unicast basis only to a specific target.

Vehicles at different locations (i.e., corresponding to the (falsified) virtual location CV1 and its original location CV1'), especially vehicles that are far apart, may sense different surrounding information, and since this information may not be shared with each other (by broadcasting, etc.), it may be possible to secure more safety. Therefore, the RSU1 may additionally request sensing information (e.g., SDSM) regarding surrounding vehicles from CV1 through the PC5 interface. In this case, the vehicles that are the sensing targets may be limited to UV vehicles that do not have communication functions (or cannot transmit and receive messages in the corresponding situation) distinct from the CV vehicles, but the CV vehicles may also be considered as the sensing targets for purposes such as message fusion (with sensing information). However, since most of the messages transmitting existing sensing information were intended to transmit information on unconnected vehicles, road users, objects, obstacles, etc., this operation may require changes to the existing messages or the introduction and application of new messages.

In this case, if status information (e.g., location information) transmitted by the CV1 has a large error from actual information (due to falsification, etc.) or actual location does not exist within the coverage of the RSU1, vehicle information (e.g., location information) included in a message fed back by the CV1 may be different from reference information of the vehicles obtained by the RSU1 or transferred from the upper V2X server, etc. For example, if the matching ratio between the information fed back by the CV1 and the reference information is less than or equal to a certain value (e.g., 90%), the CV1 may be determined to be performing misbehavior.

In some specific cases, even if there are no or very few surrounding vehicles that should receive the request and transmit/feedback a message to the RSU, a remote VRU capable of transmitting a message or another RSU (i.e., RSU2) existing around the CV1 may also participate in this method.

### 2.2.2. Base Station/Uu interface-based

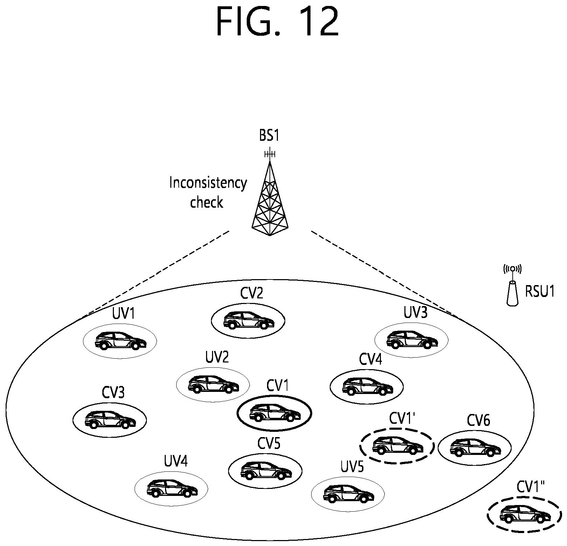

In FIG. 12, if the location reported by the CV1 UE is within the coverage of the base station 1 and the actual location is also within the coverage of the base station 1 (e.g., CV1' of FIG. 12), the inconsistency of the CV1 may be checked by Uu-based BSM, CPM, messages, etc. collected by the base station 1.

Alternatively, if the location reported by the CV1 UE is within the coverage of the base station 1 but the actual location is outside the coverage of the base station 1 (e.g., CV1" of FIG. 12), the upper V2X server, etc., may check the inconsistency information and inform the base station 1. More specifically, for example, the base station (i.e., base station 1) having the coverage that includes the location reported by the CV1 UE may be requested to check whether there is misbehavior of the UE.

When the CVs within the coverage of the base station 1 are transmitting BSM through the Uu interface, the base station 1 may additionally request information (e.g., CPM) collectively perceived from surrounding vehicles through the Uu interface from CV1. Herein, for example, the surrounding vehicles may be all vehicles within the coverage of the base station 1. Alternatively, for example, the surrounding vehicles may be within a certain radius (e.g., radius 100m)/a certain area (e.g., within 50m of the upper, lower, left, right (east, west, south, north)) around the base station 1. For example, the radius/area may increase (e.g., increase by 10m) from the initial value (e.g., radius of 30m) until a certain number of vehicles (e.g., 3 surrounding vehicles) are detected.

The CV1 that has received the request may collect BSM messages transmitted by surrounding CV vehicles (may perform operation such as redundancy mitigation) and transmit/feedback them to base station 1. However, in order to increase the accuracy and reliability of detecting the misbehavior, additional information may be requested in addition to the transmission of the received BSM message(s). For example, the transmission of sensing information regarding the surroundings by a specific vehicle may operate on a broadcast basis, but it may also operate on a groupcast basis for a group of vehicles/road users at a specific location or in a specific situation, or on a unicast basis only to a specific target.

Vehicles at different locations (i.e., corresponding to the (falsified) virtual location CV1 and its original location CV1'), especially vehicles that are far apart, may sense different surrounding information, and since this information may not be shared with each other (by broadcasting, etc.), it may be possible to secure more safety. Therefore, the base station 1 may additionally request sensing information (e.g., SDSM) regarding surrounding vehicles from CV1 through the Uu interface. In this case, the vehicles that are the sensing targets may be limited to UV vehicles that do not have communication functions (or cannot transmit and receive messages in the corresponding situation) distinct from the CV vehicles, but the CV vehicles may also be considered as the sensing targets for purposes such as message fusion (with sensing information). However, since most of the messages transmitting existing sensing information were intended to transmit information on unconnected vehicles, road users, objects, obstacles, etc., this operation may require changes to the existing messages or the introduction and application of new messages.

In this case, if status information (e.g., location information) transmitted by the CV1 has a large error from actual information (due to falsification, etc.) or actual location does not exist within the coverage of the base station 1, vehicle information (e.g., location information) included in a message fed back by the CV1 may be different from reference information of the vehicles obtained by the base station 1 or transferred from the upper V2X server, etc. For example, if the matching ratio between the information fed back by the CV1 and the reference information is less than or equal to a certain value (e.g., 90%), the CV1 may be determined to be performing misbehavior.

### 2.2.3. Information collection and misbehavior detection

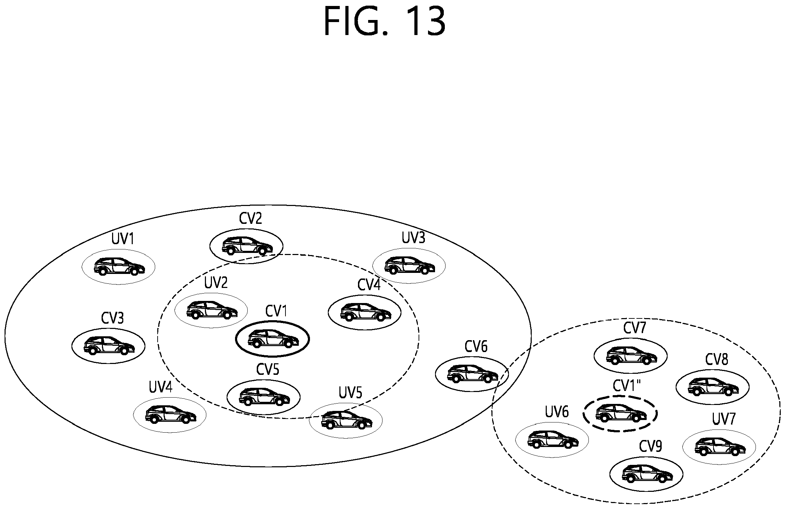

As shown in FIG. 13, if there are UEs such as CV2, CV3, CV4, UV1, UV2, and UV3 very close to CV1, and if the RSU1/base station 1 checks messages CP1, SD1, etc. collected from the CV1, it may be checked which UEs are in the area.

Information such as UE11, UE12, etc. may be checked in CP1, and information such as UE21, UE22, etc. may be checked in SD1. In this case, by tracking and matching the trajectories of these UEs for a certain period of time, it is possible to know which UEs are duplicated as the same UE (e.g., sensor-message fusion and matching) and which UEs are determined to be separate UEs among the messages. In particular, information on a UE that is determined to be duplicated may be used by taking a representative value (sampling) from messages pointing to/including the UE or reprocessing it through statistical methods such as averaging. In this case, the occurrence of the above-mentioned duplicate UE may be that the CV1 obtains information regarding a specific CV from BSM, etc., and sends the information regarding the CV in a collectively perception message, and also sends a message that shares the sensing data sensed from the CV. At least one type of message among the above-mentioned messages may be sent depending on the given conditions. If all of the above-mentioned messages cannot be sent, instead of requesting feedback from CV1, the UE performing the potential misbehavior, feedback on the detection information should be requested from other CV(s) around the UE.

For example, as shown in FIG. 13, CV1 is actually located in CV1" outside the coverage of RSU1, and the CP1 message that CV1 collectively perceives and transmits and the SD1 message that CV1 senses and transmits may include information as shown in Table 3. In this case, the message transmitted through CP1 and SD1 may be transmitted by reflecting the relative location based on the falsified location CV1, not the actual location CV1".

Table 3 shows an example of UE information received and detected from each message by a UE that is expected to misbehave.

**[Table 3]**

| UE | Message | Received Information | | | | |
|---|---|---|---|---|---|---|
| | | CV7 | CV8 | CV9 | UV6 | UV7 |
| CV1 | CP1 | O | O | O | | |
| CV1 | SD1 | O | O | O | O | O |

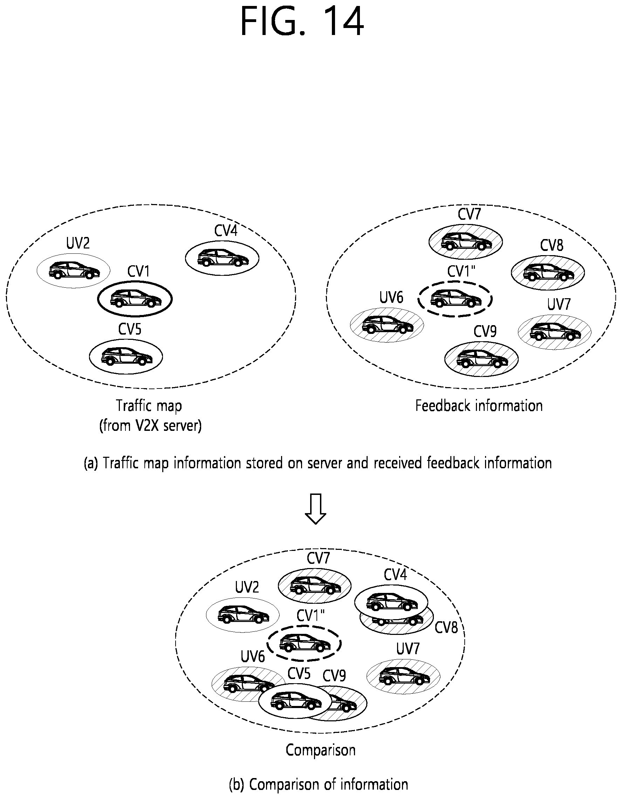

As shown in (a) of FIG. 14, the V2X server forms a traffic map based on the falsified location CV1, and this may be compared with the information fed back by the CV1 UE of (a) of FIG. 14. That is, the information of the traffic map may be compared with the results of Table 3 detected based on the actual location (CV1") of CV1. However, it is very likely that this is not the same as the information of the traffic map, and different results may be obtained, for example, as in the comparison result of the server and feedback information of (b) of FIG. 14.

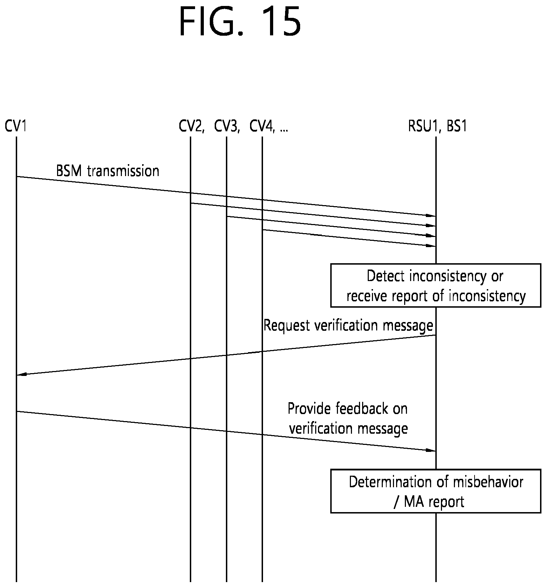

The CV/UV information (CV7 to CV9, UV6 to UV7) collected above is different from the CV/UV related information (CV4 to CV5, UV2) already obtained from the V2X server and RSU1, and different results may be obtained, for example, as in the comparison result between the information obtained from the V2X server and the information received as feedback in (b) of FIG. 14. Therefore, in this case, it may be considered that CV1 does not properly detect the surrounding situation, and it may be determined that CV1 is performing misbehavior. If the UE in which the inconsistency has occurred and a final misbehavior determination is made, the misbehavior report may be transmitted to a misbehavior authority (MA). Through this, operations such as suspension of service, revocation of authentication for the UE, etc. may be performed. The above processes may be represented as in FIG. 15.

### 3. Verification message request and feedback

Regarding the above misbehavior detection, since it may be difficult to make a definitive determination just by the UE(s) broadcasting/reporting their own status information (e.g., but inconsistency information can be checked), the RSU/base station, etc. requests transmission of a message that collectively perceives the surrounding state. In this case, collectively perceived information may be transmitted based on messages generated by sensing surrounding messages (e.g., CPM) or by obtaining surrounding sensing information (e.g., SDSM).

However, transmission of these messages is not necessarily guaranteed, and at least one of the messages may not be transmitted depending on the UE's situation, available resource status, etc. In this case, a method using messages such as the existing BSM (and optional extension) may be considered.

### 3.1. CPM/SDSM-based

If the CVs transmit CPM at the same cycle as BSM or at least periodically, the verification request and detection of misbehavior as above may be made easier. However, there may be a case where the verification message shall be requested under conditions where the CPM message is not transmitted (e.g., no perceived object data). For example, if the CV1 is operating normally, CPM may be operated and perceived, but due to the CV1's misbehavior (e.g., falsification of location information), information to be perceived by CPM may not be generated. Even in this case, CPM may be operated, that is, information that CV1 is not detected may be fed back. Certainly, it may be inefficient to transmit CPM in all cases where there is no perceived object, so CV may be configured to transmit CPM when the surrounding vehicles/RSUs, etc. directly request through (PC5 interface) communication or when the base station, etc. request through the Uu interface, etc. The above method may be applied equally when transmitting data sensed through SDSM.

### 3.2. BSM-based

As described above, when the RSU/base station, etc. cannot request and obtain CPM, SDSM, etc. at the necessary time, the above methods may not be applied. Therefore, a method using basic status messages may also be considered.

For example, when a specific vehicle is moving while broadcasting BSM, specific information may be additionally requested to the vehicle due to a specific reason, event, etc. More specifically, additional information may be requested to be transmitted in the existing BSM message through a common safety request (CSR) message, etc. That is, the RSU, etc. that has detected the inconsistency of the specific UE may request additional transmission of surrounding vehicle information through the CSR message, etc. to vehicles surrounding the UE, or may request additional transmission of surrounding vehicle information from the UE in which the inconsistency has occurred through the CSR message, etc. In this case, an optional message part that is additionally transmitted may be transmitted in the form of a data frame of VehicleSafetyExtensions in general, if it is not a special vehicle, etc.

The main optional message components of data frames of VehicleSafetyExtensions may include data elements such as VehicleEventFlags, or data frames such as path history and path prediction. For example, a specific value of the VehicleEventFlags may be designated as for the surrounding information request. For example, bits corresponding to eventReserved1 may be changed to a purpose such as eventMBVehSuspect (occurrence of a vehicle suspected of misbehavior), and the surrounding vehicle information may be mapped and transmitted in another message domain corresponding thereto. Alternatively, the eventMBVehSuspect may be created as an additional/separate component to extend VehicleEventFlags.

The mapping for the surrounding vehicle information may use, for example, the domain of path history and/or path prediction. In this way, if the VehicleEventFlags is mapped to eventMBVehSuspect, it may be used to recognize that it is reporting surrounding vehicle information, rather than being used as path history or path prediction. For example, in the case of path history, it inputs and transmits relative location information (offset information) of a previous time point by comparing it with location information of the current time point, and thus has many similarities with the purpose of the eventMBVehSuspect, which transmits relative location information of surrounding vehicles.

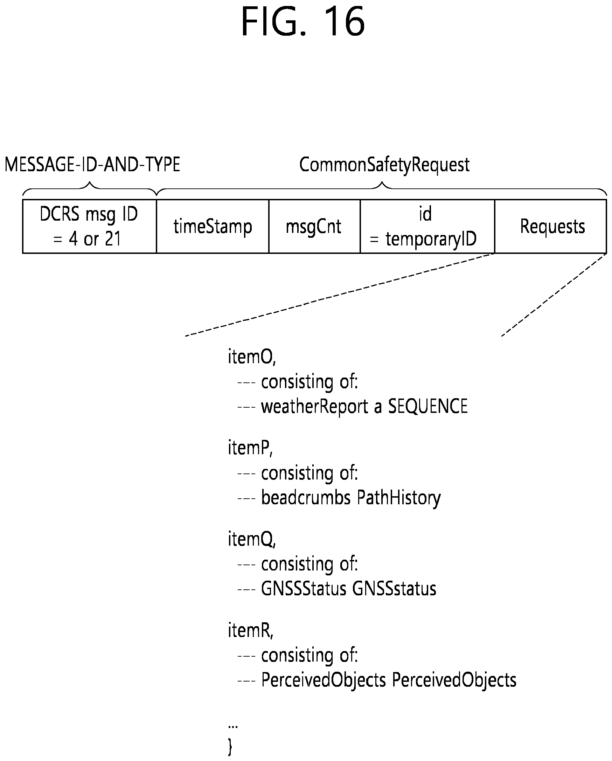

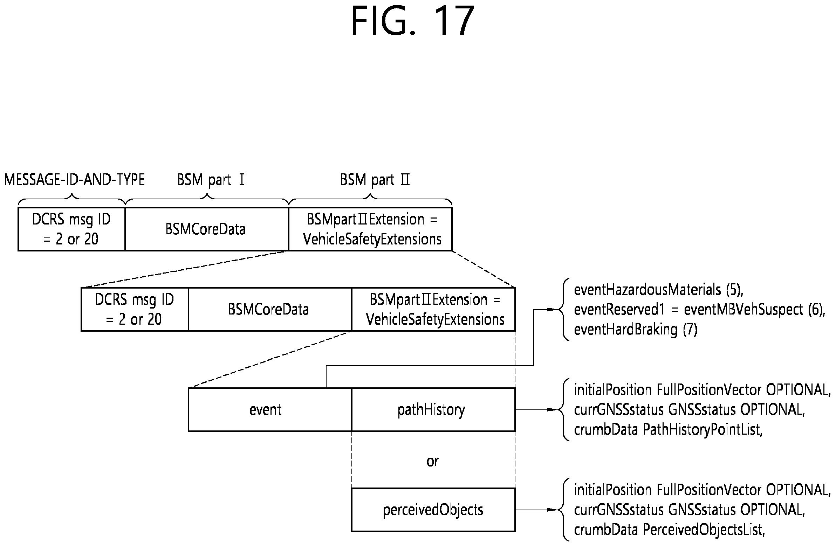

FIG. 16 shows an example of a common safety request (CSR) message, based on an embodiment of the present disclosure. FIG. 17 shows an example of perceived objects information feedback using a BSM extension message (optional part), based on an embodiment of the present disclosure. The embodiments of FIGs. 16 and 17 may be combined with various embodiments of the present disclosure.

For example, if the RSU/base station, etc. requests additional information from the UE in which the misbehavior is expected or the UE(s) surrounding the UE as in FIG. 16, the RSU/base station, etc. may transmit a V2X message (e.g., dedicated short range communication (DSRC) message) including the intent of the request in the form of CommonSafetyRequest (i.e., DSRC message ID = 4 or 21), and may designate an ID of the target UE in the form of a temporary ID. However, if the CSR message is simply used for the purpose of requesting path history, the desired result may not be achieved, so an item that specifies that the message requests surrounding information needs to be added to the field corresponding to the request of the CSR message. For example, among the items corresponding to the requests field of FIG. 16, 'PerceivedObjects' that feeds back the obtaining surrounding information may be added as a new item.

In addition, the BSM extension message transmitted by the UE(s) through this request may be in the form of transmitting optional fields of the existing extension message as they are or by modifying some of them, or may be a new type of extension message. For example, as shown in FIG. 17, the extension message may be VehicleSafetyExtensions, and the event may specify/change the existing reserved event as mentioned above, or may add a new event. In addition, the contents added subsequently may be recognized by the receiving end as information on multiple UEs in the form of path history, or by adding data elements or data frames for separate perceivedObjects, information on ID(s) of the corresponding UE(s), UE connectivity (connected, unconnected, etc.), and other UE characteristics may also be transmitted in addition to basic detection information (position, speed/velocity, heading, etc.).

In various embodiments of the present disclosure, the base station, the RSU, the V2X server, etc. may be replaced with a network node having mobility.

Based on various embodiments of the present disclosure, the network node such as the base station, the RSU, the V2X server, etc. may request, from a device in which the location information mismatch is detected, information that the device shall obtain through direct sensing. In this case, in order to accurately respond to the request, the device may have to falsify or hack information on not only its own location but also the surrounding devices. However, since it is difficult for the device to falsify or hack the information of the surrounding devices, it is possible to obtain an effect of efficiently detecting the misbehavior of the device in which the inconsistency is detected.

Based on various embodiments of the present disclosure, in order to prepare for the case where the device in which the inconsistency of information is detected falsifies or hacks not only its own location but also the information of its surrounding devices, the network node such as the base station, the RSU, or the V2X server, etc., may request information related to the device from the surrounding device(s) of the device, or (periodically) receive information related to the device from the surrounding device(s) of the device. Through this, the network node such as the base station, the RSU, the V2X server, etc., may efficiently detect the misbehavior of the device in which the inconsistency is detected based on the information generated by the surrounding devices other than the device. In this case, since the information generated by other surrounding devices is unlikely to be falsified by the device, the network node such as the base station, the RSU, the V2X server, etc., may efficiently detect the misbehavior of the device in which the inconsistency is detected based on the information generated by the surrounding devices other than the device.

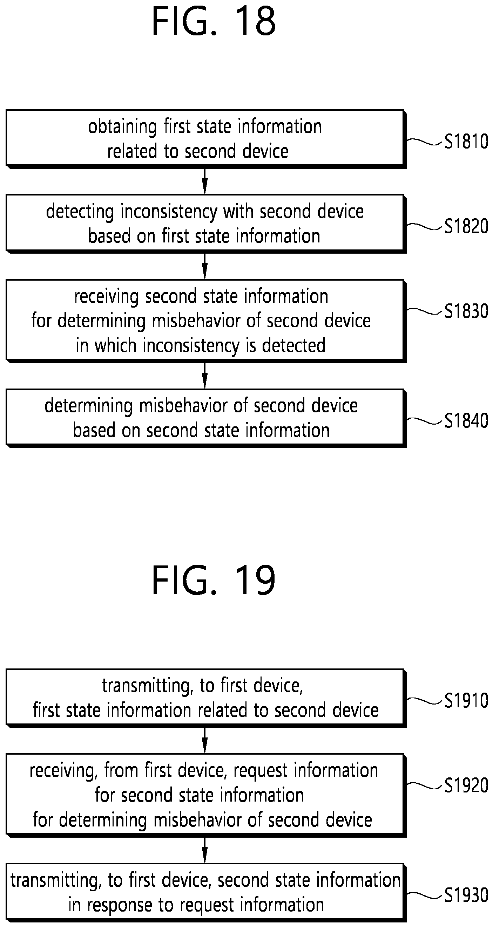

FIG. 18 shows a method for a first device to perform wireless communication, based on an embodiment of the present disclosure. The embodiment of FIG. 18 may be combined with various embodiments of the present disclosure.

Referring to FIG. 18, in step S1810, the first device may obtain first state information related to a second device. In step S1820, the first device may detect an inconsistency with the second device based on the first state information. In step S1830, the first device may receive second state information for determining misbehavior of the second device in which the inconsistency is detected. In step S1840, the first device may determine the misbehavior of the second device based on the second state information.

For example, the first state information may include at least one of heading information, position information, or velocity information of the second device, and based on the first state information or a change in the first state information being outside a threshold range, the inconsistency with the second device may be detected by the first device.

For example, the first device may include at least one of a road side unit (RSU), a base station, or a vehicle-to-everything (V2X) server.

For example, the second state information may be received from a surrounding device of the second device. For example, determining the misbehavior of the second device based on the second state information may comprise: determining the misbehavior of the second device based on that information related to the second device is not included in the second state information. For example, the surrounding device may include at least one device located within a threshold distance from the second device. For example, based on a number of the at least one device being less than a threshold number, the threshold distance may be increased such that the number of the at least one device is greater than or equal to the threshold number. For example, the second state information may be received from the surrounding device of the second device based on a request transmitted by the first device to determine the misbehavior of the second device. For example, the second state information may be received periodically from the surrounding device of the second device.

For example, the second state information may be received from the second device. For example, determining the misbehavior of the second device based on the second state information may comprise: obtaining traffic map information based on the first state information; obtaining surrounding device information of the second device based on the second state information; and determining the misbehavior of the second device based on a comparison of the traffic map information and the surrounding device information. For example, based on a matching ratio between the traffic map information and the surrounding device information being less than or equal to a threshold ratio, the misbehavior of the second device may be determined by the first device.

For example, the second state information may be received from the second device or a surrounding device of the second device by being included in at least one of a cooperative awareness message (CAM), a basic safety message (BSM), a collective perception message (CPM), or a sensor data sharing message (SDSM).

The proposed method can be applied to devices based on various embodiments of the present disclosure. First, the processor 102 of the first device 100 may obtain first state information related to a second device. In addition, the processor 102 of the first device 100 may detect an inconsistency with the second device based on the first state information. In addition, the processor 102 of the first device 100 may control the transceiver 106 to receive second state information for determining misbehavior of the second device in which the inconsistency is detected. In addition, the processor 102 of the first device 100 may determine the misbehavior of the second device based on the second state information.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: obtaining first state information related to a second device; detecting an inconsistency with the second device based on the first state information; receiving second state information for determining misbehavior of the second device in which the inconsistency is detected; and determining the misbehavior of the second device based on the second state information.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: obtaining first state information related to a second device; detecting an inconsistency with the second device based on the first state information; receiving second state information for determining misbehavior of the second device in which the inconsistency is detected; and determining the misbehavior of the second device based on the second state information.

Based on an embodiment of the present disclosure, a non-transitory computer-readable storage medium storing instructions may be provided. For example, the instructions, when executed, may cause a first device to perform operations comprising: obtaining first state information related to a second device; detecting an inconsistency with the second device based on the first state information; receiving second state information for determining misbehavior of the second device in which the inconsistency is detected; and determining the misbehavior of the second device based on the second state information.

FIG. 19 shows a method for a second device to perform wireless communication, based on an embodiment of the present disclosure. The embodiment of FIG. 19 may be combined with various embodiments of the present disclosure.

Referring to FIG. 19, in step S1910, the second device may transmit, to a first device, first state information related to the second device. In step S1920, the second device may receive, from the first device, request information for second state information for determining misbehavior of the second device. In step S1930, the second device may transmit, to the first device, the second state information in response to the request information.

The proposed method can be applied to devices based on various embodiments of the present disclosure. First, the processor 202 of the second device 200 may control the transceiver 206 to transmit, to a first device, first state information related to the second device. In addition, the processor 202 of the second device 200 may control the transceiver 206 to receive, from the first device, request information for second state information for determining misbehavior of the second device. In addition, the processor 202 of the second device 200 may control the transceiver 206 to transmit, to the first device, the second state information in response to the request information.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: transmitting, to a first device, first state information related to the second device; receiving, from the first device, request information for second state information for determining misbehavior of the second device; and transmitting, to the first device, the second state information in response to the request information.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: transmitting, to a first device, first state information related to the second device; receiving, from the first device, request information for second state information for determining misbehavior of the second device; and transmitting, to the first device, the second state information in response to the request information.

Based on an embodiment of the present disclosure, a non-transitory computer-readable storage medium storing instructions may be provided. For example, the instructions, when executed, may cause a second device to perform operations comprising: transmitting, to a first device, first state information related to the second device; receiving, from the first device, request information for second state information for determining misbehavior of the second device; and transmitting, to the first device, the second state information in response to the request information.

The various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

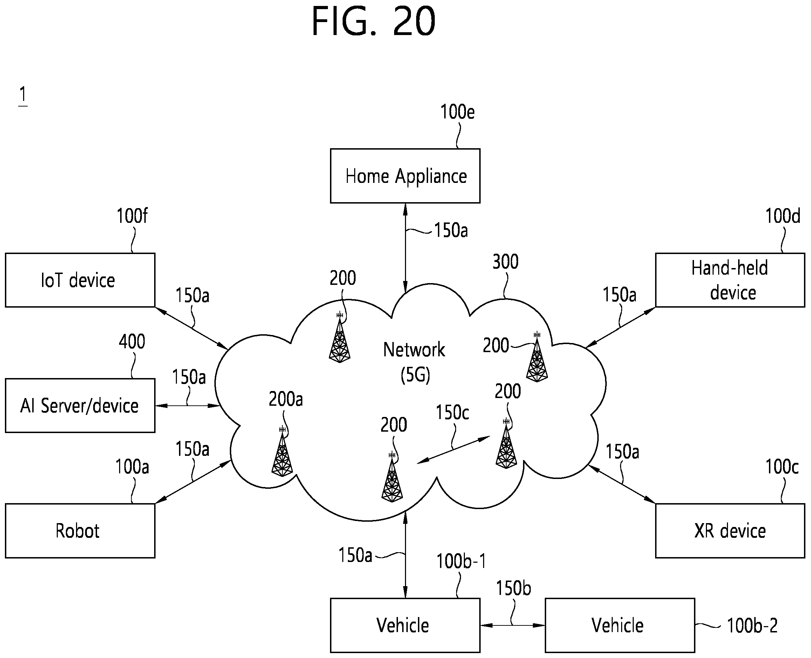

FIG. 20 shows a communication system 1, based on an embodiment of the present disclosure. The embodiment of FIG. 20 may be combined with various embodiments of the present disclosure.

Referring to FIG. 20, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

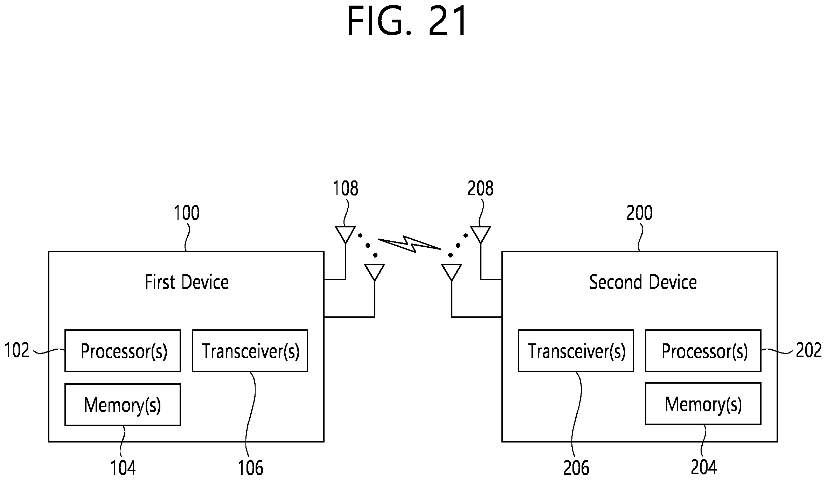

FIG. 21 shows wireless devices, based on an embodiment of the present disclosure. The embodiment of FIG. 21 may be combined with various embodiments of the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), RandomAccess Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

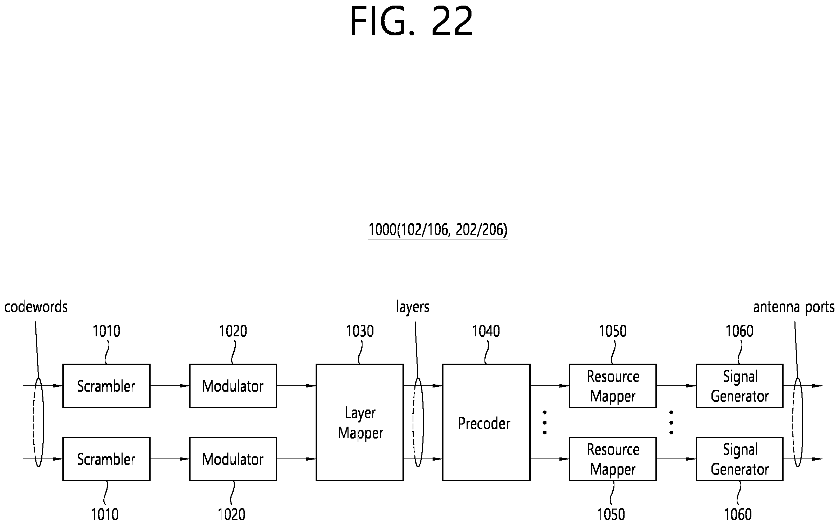

FIG. 22 shows a signal process circuit for a transmission signal, based on an embodiment of the present disclosure. The embodiment of FIG. 22 may be combined with various embodiments of the present disclosure.

Referring to FIG. 22, a signal processing circuit 1000 may include scramblers 1010, modulators 1020, a layer mapper 1030, a precoder 1040, resource mappers 1050, and signal generators 1060. An operation/function of FIG. 22 may be performed, without being limited to, the processors 102 and 202 and/or the transceivers 106 and 206 of FIG. 21. Hardware elements of FIG. 22 may be implemented by the processors 102 and 202 and/or the transceivers 106 and 206 of FIG. 21. For example, blocks 1010 to 1060 may be implemented by the processors 102 and 202 of FIG. 21. Alternatively, the blocks 1010 to 1050 may be implemented by the processors 102 and 202 of FIG. 21 and the block 1060 may be implemented by the transceivers 106 and 206 of FIG. 21.

Codewords may be converted into radio signals via the signal processing circuit 1000 of FIG. 22. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 22. For example, the wireless devices (e.g., 100 and 200 of FIG. 21) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

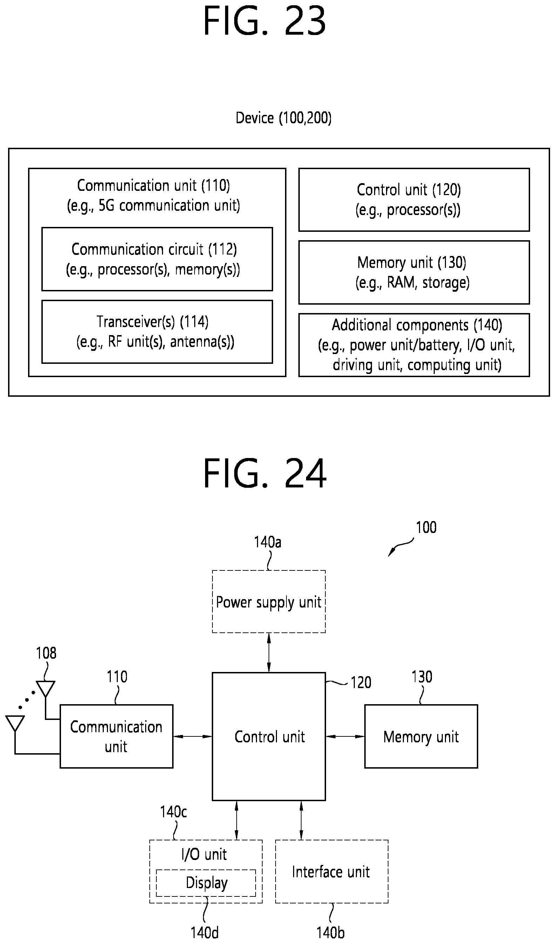

FIG. 23 shows another example of a wireless device, based on an embodiment of the present disclosure. The wireless device may be implemented in various forms according to a use-case/service (refer to FIG. 20). The embodiment of FIG. 23 may be combined with various embodiments of the present disclosure.

Referring to FIG. 23, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcast terminal, a hologram device, a public safety device, an MTC device, a medicine device, a fintech device (or a finance device), a security device, a climate/environment device, the AI server/device (400 of FIG. 20), the BSs (200 of FIG. 20), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 23 will be described in detail with reference to the drawings.

FIG. 24 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 24 may be combined with various embodiments of the present disclosure.

Referring to FIG. 24, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 23, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

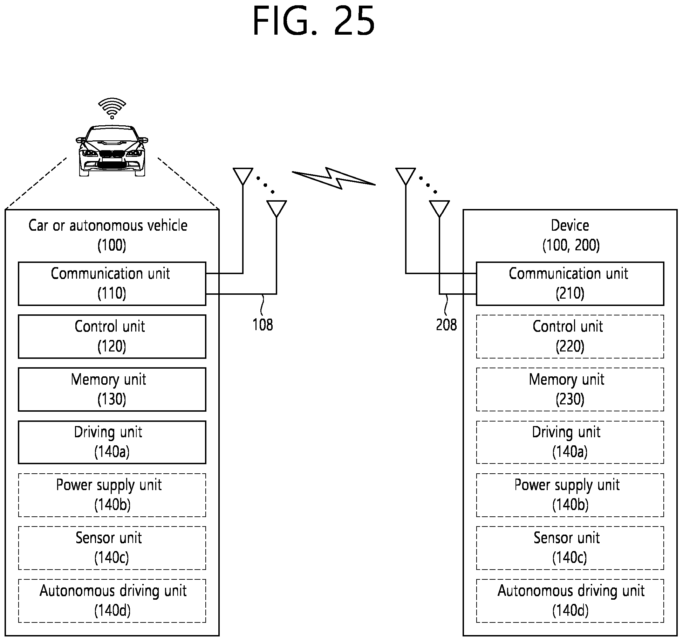

FIG. 25 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 25 may be combined with various embodiments of the present disclosure.

Referring to FIG. 25, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining first state information related to a second device;
detecting an inconsistency with the second device based on the first state information;
receiving second state information for determining misbehavior of the second device in which the inconsistency is detected; and
determining the misbehavior of the second device based on the second state information.

2. The method of claim 1, wherein the first state information includes at least one of heading information, position information, or velocity information of the second device, and
wherein, based on the first state information or a change in the first state information being outside a threshold range, the inconsistency with the second device is detected by the first device.

3. The method of claim 1, wherein the first device includes at least one of a road side unit (RSU), a base station, or a vehicle-to-everything (V2X) server.

4. The method of claim 1, wherein the second state information is received from a surrounding device of the second device.

5. The method of claim 4, wherein determining the misbehavior of the second device based on the second state information comprises: determining the misbehavior of the second device based on that information related to the second device is not included in the second state information.

6. The method of claim 4, wherein the surrounding device includes at least one device located within a threshold distance from the second device.

7. The method of claim 6, wherein, based on a number of the at least one device being less than a threshold number, the threshold distance is increased such that the number of the at least one device is greater than or equal to the threshold number

8. The method of claim 4, wherein the second state information is received from the surrounding device of the second device based on a request transmitted by the first device to determine the misbehavior of the second device.

9. The method of claim 4, wherein the second state information is received periodically from the surrounding device of the second device.

10. The method of claim 1, wherein the second state information is received from the second device.

11. The method of claim 10, wherein determining the misbehavior of the second device based on the second state information comprises: obtaining traffic map information based on the first state information; obtaining surrounding device information of the second device based on the second state information; and determining the misbehavior of the second device based on a comparison of the traffic map information and the surrounding device information.

12. The method of claim 11, wherein, based on a matching ratio between the traffic map information and the surrounding device information being less than or equal to a threshold ratio, the misbehavior of the second device is determined by the first device.

13. The method of claim 1, wherein the second state information is received from the second device or a surrounding device of the second device by being included in at least one of a cooperative awareness message (CAM), a basic safety message (BSM), a collective perception message (CPM), or a sensor data sharing message (SDSM).

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
obtaining first state information related to a second device;
detecting an inconsistency with the second device based on the first state information;
receiving second state information for determining misbehavior of the second device in which the inconsistency is detected; and
determining the misbehavior of the second device based on the second state information.

15. A processing device adapted to control a first device, the processing device comprising:
at least one processor; and
at least one memory connected to the at least one processor and storing instructions that, based on being executed by the at least one processor, cause the first device to perform operations comprising:
obtaining first state information related to a second device;
detecting an inconsistency with the second device based on the first state information;
receiving second state information for determining misbehavior of the second device in which the inconsistency is detected; and
determining the misbehavior of the second device based on the second state information.

16. A non-transitory computer-readable storage medium storing instructions that, when executed, cause a first device to perform operations comprising:
obtaining first state information related to a second device;
detecting an inconsistency with the second device based on the first state information;
receiving second state information for determining misbehavior of the second device in which the inconsistency is detected; and
determining the misbehavior of the second device based on the second state information.

17. A method for performing wireless communication by a second device, the method comprising:
transmitting, to a first device, first state information related to the second device;
receiving, from the first device, request information for second state information for determining misbehavior of the second device; and
transmitting, to the first device, the second state information in response to the request information.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
transmitting, to a first device, first state information related to the second device;
receiving, from the first device, request information for second state information for determining misbehavior of the second device; and
transmitting, to the first device, the second state information in response to the request information.

19. A processing device adapted to control a second device, the processing device comprising:
at least one processor; and
at least one memory connected to the at least one processor and storing instructions that, based on being executed by the at least one processor, cause the second device to perform operations comprising:
transmitting, to a first device, first state information related to the second device;
receiving, from the first device, request information for second state information for determining misbehavior of the second device; and
transmitting, to the first device, the second state information in response to the request information.

20. A non-transitory computer-readable storage medium storing instructions that, when executed, cause a second device to perform operations comprising:
transmitting, to a first device, first state information related to the second device;
receiving, from the first device, request information for second state information for determining misbehavior of the second device; and
transmitting, to the first device, the second state information in response to the request information.
